# EUROPÄISCHE PATENTSCHRIFT

(11) **EP 2 651 680 B1**
(45) Veröffentlichungstag und Bekanntmachung des Hinweises auf die Patenterteilung: **19.07.2017**
(21) Anmeldenummer: 11782578.6
(22) Anmeldetag: 08.11.2011
(51) Int. Cl.: B60W 20/30, B60W 20/40, B60K 6/48, B60K 6/365, B60K 6/387, F16H 3/72

(54) **VORRICHTUNG FÜR EINEN ANTRIEBSSTRANG EINES HYBRIDFAHRZEUGS, ANTRIEBSSTRANG UND VERFAHREN ZUM BETREIBEN DERSELBEN**
DEVICE FOR A DRIVE TRAIN OF A HYBRID VEHICLE, DRIVE TRAIN AND METHOD FOR OPERATING SAME
DISPOSITIF POUR UNE CHAÎNE CINÉMATIQUE D'UN VÉHICULE HYBRIDE, CHAÎNE CINÉMATIQUE ET PROCÉDÉ POUR FAIRE FONCTIONNER CELLE-CI

(30) Priorität: 17.12.2010 DE 102010063311
(43) Veröffentlichungstag der Anmeldung: 23.10.2013
(73) Patentinhaber: ZF Friedrichshafen AG, 88046 Friedrichshafen (DE)
(72) Erfinder: BORNTRÄGER, Kai, 88085 Langenargen (DE); KALTENBACH, Johannes, 88048 Friedrichshafen (DE)
(86) Internationale Anmeldenummer: PCT/EP2011/069590
(87) Internationale Veröffentlichungsnummer: WO 2012/079850

(56) Entgegenhaltungen:
- WO-A1-2008/071151
- DE-A1- 19 650 723
- DE-A1-102008 011 080
- US-A1- 2002 065 168

## Beschreibung

Die Erfindung betrifft eine Vorrichtung für einen Antriebsstrang eines Hybridfahrzeugs nach dem Oberbegriff des Anspruchs 1, einen Antriebsstrang eines Hybridfahrzeugs mit einer solchen Vorrichtung und Verfahren zum Betreiben derselben.

Aus der DE 199 34 696 A1 ist ein Antriebsstrang eines Hybridfahrzeugs bekannt, dessen Antriebsstrang einen Verbrennungsmotor und eine elektrische Maschine umfasst. Weiterhin umfasst der aus diesem Stand der Technik bekannte Antriebsstrang ein Getriebe, welches zwischen das Antriebsaggregat und einen Abtrieb des Antriebsstrangs geschaltet ist, wobei der Verbrennungsmotor, die elektrische Maschine und das Getriebe über eine ein Planetengetriebe und eine Kupplung umfassende Vorrichtung aneinander gekoppelt sind. Das Planetengetriebe umfasst als Elemente ein Hohlrad, ein Sonnenrad sowie einen Steg, wobei zwei dieser drei Elemente des Planetengetriebes über die Kupplung koppelbar sind, die dann als Überbrückungskupplung dient. Ein solcher Antriebsstrang eines Hybridfahrzeugs wird auch als elektrodynamisches Antriebssystem bezeichnet.

Aus der DE 10 2008 011 080 A1 ist ein Antriebsstrang für ein Hybridfahrzeug mit einem Getriebe bekannt, an dem ein erster Eingang für den Verbrennungsmaschinen-Antrieb, ein zweiter Eingang für den Elektromaschinen-Antrieb und ein Ausgang, welcher an eine Abtriebswelle kuppelbar ist, ausgebildet sind, wobei an dem ersten Eingang eine Schaltvorrichtung vorgesehen ist, mit welcher eine Verbrennungsmaschinen-Welle an das Getriebe ankuppelbar ist, und wobei an dem ersten Eingang eine schaltbare Momentenabstützvorrichtung vorgesehen ist.

Aus der DE 196 50 723 A1 ist ein Steuersystem für eine Fahrzeugantriebseinheit bekannt. Die Fahrzeugantriebseinheit weist ein Planetengetriebe auf, wobei ein Ringrad und ein Sonnenrad des Planetengetriebes durch eine direkte Kupplung verbindbar sind.

Mit einem solchen Antriebssystem ist ein definierter Funktionsumfang an einem Antriebsstrang eines Hybridfahrzeugs realisierbar. Es besteht jedoch Bedarf, den Funktionsumfang eines solchen Antriebstrangs zu erweitern.

Hiervon ausgehend liegt der vorliegenden Erfindung die Aufgabe zu Grunde, eine neuartige Vorrichtung für einen Antriebsstrang eines Hybridfahrzeugs sowie einen neuartigen Antriebstrang und Verfahren zum Betreiben derselben zu schaffen.

Diese Aufgabe wird durch eine Vorrichtung gemäß Anspruch 1 gelöst. Die erfindungsgemäße Vorrichtung umfasst ein Schaltelement, über weiches ein drittes Element der Elemente des Planetengetriebes in einer ersten Schaltstellung des Schaltelements an einen Verbrennungsmotor des Hybridantriebs und in einer zweiten Schaltstellung des Schaltelements gehäuseseitig bzw. statorseitig ankoppelbar ist.

Mit der hier vorliegenden Erfindung wird vorgeschlagen, das dritte Element des Planetengetriebes, welches beim elektrodynamischen Antriebssystem des Standes der Technik fest an den Verbrennungsmotor koppelbar ist, abhängig von der Schaltstellung eines Schaltelements entweder an den Verbrennungsmotor anzukoppeln oder alternativ gehäuseseitig bzw. statorseitig anzukoppeln. Dadurch kann der Funktionsumfang des aus dem Stand der Technik bekannten Antriebsstrangs eines Hybridfahrzeugs erweitert werden. Dabei ist die erfindungsgemäße Lösung unabhängig von der Bauform des Verbrennungsmotors sowie der Bauform des zwischen das Antriebsaggregat und den Abtrieb geschalteten Getriebes, sodass die erfindungsgemäße Vorrichtung, die zumindest das Planetengetriebe, die Kupplung und das Schaltelement umfasst, als Modul unabhängig vom Verbrennungsmotortyp und Getriebetyp bereitgestellt werden kann.

Nach einer vorteilhaften Weiterbildung ist das dritte Element der Elemente des Planetengetriebes in einer dritten Schaltstellung des Schaltelements sowohl vom Verbrennungsmotor als auch gehäuseseitig abkoppelbar, sodass das dritte Element frei drehen kann. Hierdurch kann der Funktionsumfang des aus dem Stand der Technik bekannten Antriebsstrangs eines Hybridfahrzeugs abermals erweitert werden.

Der erfindungsgemäße Antriebsstrang ist in Anspruch 8 definiert. Erfindungsgemäße Verfahren zum Betreiben einer erfindungsgemäßen Vorrichtung bzw. eines erfindungsgemäßen Antriebsstrangs sind in den Patentansprüchen 10, 11, 12, 13, 14 und 15 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines erfindungsgemäßen Antriebsstrangs mit einer erfindungsgemäßen Vorrichtung nach einem ersten Ausführungsbeispiel der Erfindung;
- Fig. 2: den erfindungsgemäßen Antriebsstrang bzw. die erfindungsgemäße Vorrichtung der Fig. 1 in einem ersten Zustand;
- Fig. 3: den erfindungsgemäßen Antriebsstrang bzw. die erfindungsgemäße Vorrichtung der Fig. 1 in einem zweiten Zustand;
- Fig. 4: den erfindungsgemäßen Antriebsstrang bzw. die erfindungsgemäße Vorrichtung der Fig. 1 in einem dritten Zustand; und
- Fig. 5: ein Schema eines erfindungsgemäßen Antriebsstrangs mit einer erfindungsgemäßen Vorrichtung nach einem zweiten Ausführungsbeispiel der Erfindung.

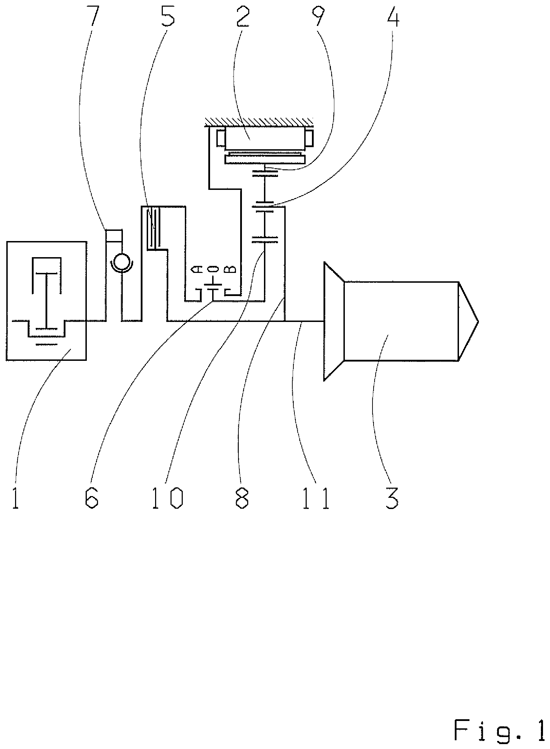

Fig. 1 zeigt ein Ausführungsbeispiel eines Antriebsstrangs eines Hybridfahrzeugs zusammen mit einer Vorrichtung für einen solchen Antriebsstrang, wobei der Antriebsstrang der Fig. 1 einen Hybridantrieb bzw. ein Antriebsaggregat mit einem Verbrennungsmotor 1 und einer elektrischen Maschine 2 umfasst, wobei zwischen den Hybridantrieb bzw. das Antriebsaggregat und einen nicht gezeigten Abtrieb ein Getriebe 3 geschaltet ist, welches vorzugsweise als automatisches bzw. automatisiertes Schaltgetriebe ausgeführt ist.

Zwischen das Antriebsaggregat bzw. den Hybridantrieb, der vom Verbrennungsmotor 1 und der elektrischen Maschine 2 bereitgestellt wird, und das Getriebe 3 ist eine erfindungsgemäße Vorrichtung für einen solchen Antriebsstrang geschaltet, wobei die erfindungsgemäße Vorrichtung zumindest ein Planetengetriebe 4, eine Kupplung 5 und ein Schaltelement 6 umfasst. Fig. 1 zeigt auch einen dem Verbrennungsmotor zugeordneten Torsionsdämpfer 7 zur Anbindung desselben ans Planetengetriebe 4.

Das Planetengetriebe 4 umfasst zumindest die Elemente Steg 8, Hohlrad 9 und Sonnenrad 10, wobei ein erstes Element dieser drei Elemente 8, 9 und 10 des Planetengetriebes 4 der festen Anbindung einer Getriebeeingangswelle 11 des Getriebes 3 dient, und wobei ein zweites Element dieser drei Elemente 8, 9 und 10 des Planetengetriebes 4 der festen Anbindung der elektrischen Maschine 2 dient. Im Ausführungsbeispiel der Fig. 1 handelt es sich beim ersten Element, welches der Anbindung der Getriebeeingangswelle 11 des Getriebes 3 dient, um den Steg 8 des Planetengetriebes 4 und beim zweiten Element des Planetengetriebes 4, welches der festen Anbindung der elektrischen Maschine 2 dient, um das Hohlrad 9 des Planetengetriebes 4.

Über das Schaltelement 6 ist ein drittes Element der drei Elemente 8, 9 und 10 des Planetengetriebes 4 in einer ersten Schaltstellung A des Schaltelements an den Verbrennungsmotor 1 des Hybridantriebs ankoppelbar, wohingegen in einer zweiten Schaltstellung B des Schaltelements 6 das dritte Element der drei Elemente 8, 9 und 10 des Planetengetriebes 4 gehäuseseitig bzw. statorseitig ankoppelbar ist, wobei es sich in Fig. 1 bei diesem dritten Element des Planetengetriebes 4 um das Sonnenrad 10 des Planetengetriebes 4 handelt.

Die Kupplung 5 ist zwischen zwei dieser drei Elemente 8, 9 und 10 des Planetengetriebes 4 koppelbar, nämlich im Ausführungsbeispiel der Fig. 1 in der Schaltstellung A des Schaltelements 6 zwischen den Steg 8 und das Sonnenrad 10.

Im gezeigten Ausführungsbeispiel der Fig. 1 umfasst das Schaltelement 6 neben den beiden Schaltstellungen A und B eine weitere Schaltstellung O, wobei in der Schaltstellung O des Schaltelements 6 das dritte Element des Planetengetriebes 4, nämlich in Fig. 1 das Sonnenrad 10, sowohl vom Verbrennungsmotor 1 abgekoppelt ist als auch gehäuseseitig abgekoppelt ist, sodass das dritte Element des Planetengetriebes 4, nämlich in Fig. 1 das Sonnenrad 10, frei drehen kann.

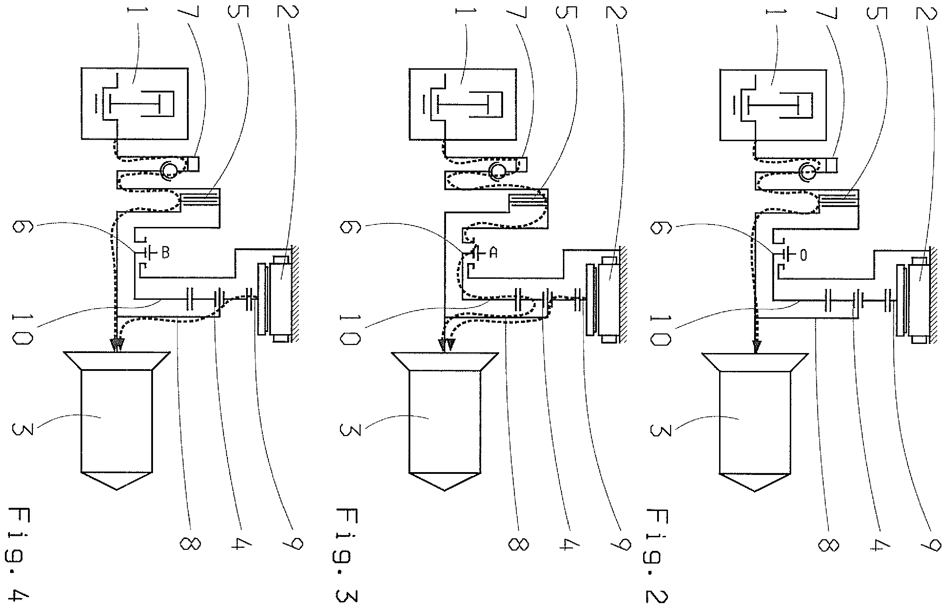

Fig. 2 bis 4 zeigen für das Ausführungsbeispiel der Fig. 1 die Kraftflüsse bzw. Momentflüsse vom Verbrennungsmotor 1 und der elektrischen Maschine 2 zum Getriebe 3 in den drei Schaltzuständen O, A und B des Schaltelements 6.

Obwohl ein Schaltelement 6 mit den drei Schaltstellungen O, A und B bevorzugt ist, ist es auch möglich, ausschließlich ein Schaltelement 6 mit den beiden Schaltstellungen A und B vorzusehen.

Im Zustand der Fig. 2 nimmt das Schaltelement 6 die Schaltstellung O ein, in diesem Zustand ist demnach das dritte Element des Planetengetriebes 4, also gemäß Fig. 1 bis 4 das Sonnenrad 10 des Planetengetriebes 4, weder an den Verbrennungsmotor 1 noch gehäuseseitig bzw. statorseitig angekoppelt, sodass das dritte Element, also gemäß Fig. 1 das Sonnenrad 10 des Planetengetriebes 4, frei drehen kann.

In dieser Schaltstellung O des Schaltelements 6 wird die elektrische Maschine 2 durch das Rastmoment bis zum Stillstand abgebremst.

In der Schaltstellung O fallen keine Nulllastverluste in der elektrischen Maschine 2 an, die bei einer drehenden, elektrischen Maschine 2 durch eine Drehfeldzeugung entstehen könnten.

Die Schaltstellung O wird insbesondere bei Konstantfahrten, also bei Fahrten des Hybridfahrzeugs mit einer relativ konstanten Fahrtgeschwindigkeit, gewählt, bei welchen ein Bedarf an elektrischer Energie gering ist, um so die elektrische Maschine 2 vom Antriebsstrang quasi abzukoppeln.

Dann, wenn das Schaltelement 6 die Schaltstellung O einnimmt, verhält sich der Antriebsstrang wie ein konventioneller Antrieb mit lediglich dem Verbrennungsmotor 1, wobei dann keine Hybridfunktionen möglich sind.

Der Zustand gemäß Fig. 2, in welchen das Schaltelement 6 die Schaltstellung O einnimmt, ist auch für einen Notbetrieb des Hybridfahrzeugs geeignet. So verfügen insbesondere Synchronmaschinen bei sehr niedrigen Drehzahlen im sogenannten aktiven Kurzschluss über ein sehr hohes Moment, welches ein Anfahren bei inaktiver Kennfeldregelung unmöglich machen würde. Durch das Abkoppeln des dritten Elements des Planetengetriebes 4, nämlich gemäß Fig. 1 bis 4 des Sonnenrads 10 des Planetengetriebes 4, kann ein solches Drehmoment auf den Getriebeeingang, nämlich die Getriebeeingangswelle 11 des Getriebes 3, nicht bremsend wirken und dieselbe kann das volle Moment des Verbrennungsmotors 1 übertragen.

Dann, wenn gemäß Fig. 3 das Schaltelement 6 die Schaltstellung A einnimmt, dient das Planetengetriebe 4 als Überlagerungsgetriebe und die Kupplung 5 ist als Überbrückungskupplung zwischen das dritte Element des Planetengetriebes und das erste Element desselben geschaltet, also gemäß Fig. 1 zwischen das Sonnenrad 10 und den Steg 8. Dann, wenn das Schaltelement 6 die erste Schaltstellung A einnimmt, kann die elektrische Maschine 2 Drehmoment am zweiten Element des Planetengetriebes 4, nämlich gemäß Fig. 1 am Hohlrad 9, abstützen und an der Getriebeeingangswelle 11 des Getriebes 3 steht als Antriebsmoment ein Summenmoment aus dem vom Verbrennungsmotor 1 bereitgestellten Moment und dem von der elektrischen Maschine 2 bereitgestellten Moment an.

In dieser Schaltstellung A des Schaltelements 6 verhält sich der Antriebsstrang grundsätzlich wie das aus der DE 199 34 696 A1 bekannte, elektrodynamische Antriebssystem. Wie bereits ausgeführt, wirkt die Kupplung 5 dann als Überbrückungskupplung des Planetengetriebes 4.

Dann, wenn das Schaltelement 6 die Schaltstellung B einnimmt, wie es in Fig. 4 gezeigt ist, ist das dritte Element des Planetengetriebes 4, nämlich gemäß Fig. 1 und 4 das Sonnenrad 10, vom Verbrennungsmotor 1 abgekoppelt und gehäusefest angekoppelt. Die Kupplung 5 wirkt dann als Trennkupplung für den Verbrennungsmotor 1 und das Planetengetriebe 4 stellt eine Konstantübersetzung bereit, sodass die elektrische Maschine 2 mit der Übersetzung des Planetengetriebes 4 mit der Getriebeeingangswelle 11 verbunden ist.

In diesem Schaltzustand B des Schaltelements 6 ist rein elektrisches Fahren mit einer hoch übersetzten, elektrischen Maschine 2 möglich.

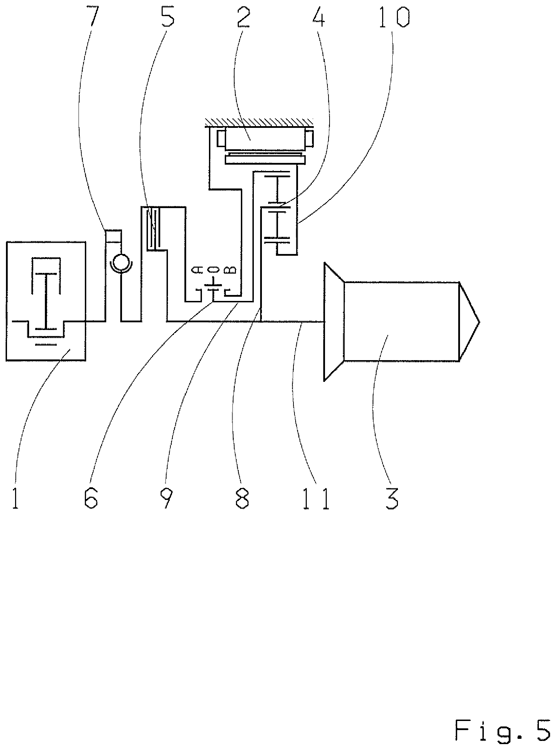

Fig. 5 zeigt eine alternative Ausgestaltung der Erfindung, in welcher die Anbindung von elektrischer Maschine 2 und Verbrennungsmotor 1 im Vergleich zum Ausführungsbeispiel der Fig. 1 bis 4 verändert ist, um so andere Übersetzungsverhältnisse darstellen zu können.

In Fig. 5 handelt es sich beim sich beim ersten Element, welches der Anbindung der Getriebeeingangswelle 11 des Getriebes 3 dient, um den Steg 8 des Planetengetriebes 4 und beim zweiten Element des Planetengetriebes 4, welches der festen Anbindung der elektrischen Maschine 2 dient, um das Sonnerad 10 des Planetengetriebes 4. Beim dritten Element, welches in einer ersten Schaltstellung A des Schaltelements 6 an den Verbrennungsmotor 1 ankoppelbar und welches in einer zweiten Schaltstellung B des Schaltelements 6 gehäuseseitig bzw. statorseitig ankoppelbar ist, handelt es sich in Fig. 5 um das Hohlrad 9 des Planetengetriebes 4.

In Fig. 1 bis 5 handelt es sich beim Planetengetriebe 4 vorzugsweise um ein Minus-Getriebe. In einer weiteren, nicht gezeigten Variante der Erfindung kann das Planetengetriebe 4 auch als sogenanntes Plus-Getriebe ausgeführt sein.

Dann, wenn das Planetengetriebe 4 als Plus-Getriebe ausgeführt ist, handelt es sich beim ersten Element des Planetengetriebes, welches der Anbindung der Getriebeeingangswelle 11 des Getriebes 3 dient, um das Hohlrad des Planetengetriebes, beim zweiten Element des Planetengetriebes, welches der Anbindung der elektrischen Maschine 2 dient, handelt es sich dann um das Sonnenrad des Planetengetriebes, und beim dritten Element des Planetengetriebes, das über das Schaltelement 6 umschaltbar an den Verbrennungsmotor 1 oder gehäusefest ankoppelbar ist, handelt es sich dann um den Steg des Planetengetriebes.

Im Stillstand des Hybridfahrzeugs oder bei kleinen Fahrgeschwindigkeiten wird dann, wenn ein Ladezustand eines elektrischen Energiespeichers größer als ein definierter Grenzwert für den Ladezustand ist, das Schaltelement 6 vorzugsweise in der Schaltposition B betrieben, sodass eine rein elektrische Fahrt aus dem Stillstand des Kraftfahrzeugs heraus möglich ist. In anderen Ladezuständen wird die Schaltposition A des Schaltelements 6 gewählt, um auch bei geringem Ladezustand des elektrischen Energiespeichers anfahren zu können.

Beim Rekuperieren, also beim Bremsen über die elektrische Maschine, nimmt das Schaltelement 6 die zweite Schaltposition B ein, damit der Verbrennungsmotor 1 über die Kupplung 5 abgekoppelt und abgeschaltet werden kann.

Wie bereits erwähnt, nimmt das Schaltelement 6 die Schaltposition O insbesondere bei einer Konstantfahrt, also bei einer Fahrt mit einer im Wesentlichen konstanten Fahrgeschwindigkeit, und im Fehlerfall der elektrischen Maschine 2 ein.

Bei Konstantfahrt wird wenig generatorisch erzeugte, elektrische Energie benötigt, sodass zur Vermeidung von Nulllastverlusten die elektrische Maschine 2 vom Antriebsstrang abgekoppelt werden kann. Bei einer Fehlfunktion der elektrischen Maschine 2 kann über die Schaltstellung O des Schaltelements 6 das Verhalten eines konventionellen, rein verbrennungsmotorischen Antriebsstrangs bereitgestellt werden.

Beim Schaltelement 6 handelt es sich vorzugsweise um ein formschlüssig schaltendes Schaltelement. Bei der Kupplung 5 kann es sich um eine reibschlüssige Kupplung oder auch um eine formschlüssige Kupplung handeln.

Die Verwendung einer reibschlüssigen Kupplung 5 ist bevorzugt. Die meisten Funktionen sind jedoch auch mit einer formschlüssigen Kupplung 5, zum Beispiel einer unsynchronisierten Klauenkupplung, realisierbar.

Die hier vorliegende Erfindung betrifft weiterhin Verfahren zum Betreiben einer erfindungsgemäßen Vorrichtung bzw. eines erfindungsgemäßen Antriebsstrangs mit einer erfindungsgemäßen Vorrichtung.

Ein erstes erfindungsgemäßes Verfahren betrifft ein Umschalten des Schaltelements 6 von der Schaltposition A in die Schaltposition B bei anfänglich geöffneter Kupplung 5. Im Ausgangszustand dieses Verfahrens ist demnach die Schaltposition A des Schaltelements 6 eingelegt und die Kupplung 5 geöffnet, wobei dann mit dem als elektrodynamisches Antriebssystem wirkenden Antriebsstrang angefahren werden kann, bis sich das Planetengetriebe 4 im sogenannten Blockumlauf befindet, in welchem Drehzahlgleichheit zwischen den drei Elementen 8, 9 und 10 besteht. In diesem Zustand kann dann die Kupplung 5 synchron geschlossen werden. Um nun von der Schaltposition A in die Schaltposition B am Schaltelement zu wechseln, wird zunächst die elektrische Maschine 2 vorzugsweise vollständig lastfrei gemacht und deren bereitgestellte Last soweit wie möglich, also vollständig oder teilweise, auf den Verbrennungsmotor 1 verlagert, wobei hierbei das Schaltelement 6 bezogen auf die Schaltposition A lastfrei gemacht wird, sodass nachfolgend die Schaltposition A lastfrei ausgelegt werden kann. Anschließend wird mithilfe der elektrischen Maschine 2 das Schaltelement 6 bezogen auf die Schaltposition B über einen drehzahlgeregelten Betrieb der elektrischen Maschine 2 synchronisiert, was im Ausführungsbeispiel der Fig. 1 bis 4 bedeutet, dass am Sonnenrad 10 vorzugsweise eine Drehzahl von Null eingestellt wird. Nachfolgend wird am Schaltelement 6 die Schaltposition B eingelegt. Anschließend kann gegebenenfalls ein Lastaufbau an der elektrischen Maschine 2, zum Beispiel im generatorischen Betrieb derselben, erfolgen. Dieses Verfahren kann sowohl dann durchgeführt werden, wenn die Kupplung 5 als formschlüssige Kupplung oder als reibschlüssige Kupplung ausgeführt wird. Ein Vorteil dieses Verfahrens besteht darin, dass beim Umschalten des Schaltelements 6 von der Schaltposition A in die Schaltposition B keine Zugkraftunterbrechung erfolgt, weil der Verbrennungsmotor 1 über die geschlossene Kupplung 5 der Getriebeeingangswelle 11 des Getriebes 3 ein Moment bereitstellt.

Ein zweites erfindungsgemäßes Verfahren betrifft das Umschalten des Schaltelements 6 von der Schaltposition B in die Schaltposition A bei geöffneter Kupplung 5, wobei dieses Verfahren sowohl mit einer als reibschlüssige Kupplung als auch als formschlüssige Kupplung ausgebildeten Kupplung 5 durchgeführt werden kann. Im Ausgangszustand dieses Verfahrens ist demnach die Schaltposition B des Schaltelements 6 eingelegt und die Kupplung 5 geöffnet. Zur Umschaltung von der Schaltposition B in die Schaltposition A wird zunächst die elektrische Maschine 2 unter Bereitstellung einer Zugkraftunterbrechung lastfrei gemacht, wobei anschließend die Schaltposition B ausgelegt wird. Anschließend erfolgt mithilfe der elektrischen Maschine 2 im drehzahlgeregelten Betrieb derselben eine Synchronisierung des Schaltelements 6 bezüglich der Schaltposition A, wobei darauffolgend die Schaltposition A eingelegt wird. Bei der Synchronisierung des Schaltelements 6 bezogen auf die Schaltposition A kann dasselbe auf Leerlaufdrehzahl des Verbrennungsmotors 1 synchronisiert werden.

Ein drittes erfindungsgemäßes Verfahren betrifft ein Umschalten des Schaltelements 6 von der Schaltposition B in die Schaltposition A bei geschlossener Kupplung 5, wobei dieses Verfahren auch mit einer reibschlüssigen Kupplung 5 sowie einer formschlüssigen Kupplung 5 durchgeführt werden kann. Hierbei wird zunächst, also bei eingelegter Schaltposition B und geschlossener Kupplung 5, die elektrische Maschine 2 lastfrei gemacht, wobei die Last der elektrischen Maschine 2 soweit möglich, also vollständig oder teilweise, auf den Verbrennungsmotor 1 verlagert wird. Hierbei wird dann das Schaltelement 6 bezogen auf die Schaltposition B lastfrei, sodass die Schaltposition B lastfrei ausgelegt werden kann. Nachfolgend erfolgt über die elektrische Maschine 2 eine drehzahlgeregelte Synchronisierung des Schaltelements 6 bezogen auf die Schaltposition A, wobei nachfolgend die Schaltposition A eingelegt wird. Bei der Synchronisierung des Schaltelements 6 bezogen auf die Schaltposition A erfolgt eine Synchronisierung in Bezug auf die Ist-Drehzahl des Verbrennungsmotors 1.

Soll bei eingelegter Schaltposition A die Kupplung 5 geöffnet werden, so wird Last des Verbrennungsmotors 1 mithilfe der elektrischen Maschine 2 abgestützt, sodass die Kupplung 5 lastfrei wird. Ein hierzu erforderliches Momentenverhältnis von Verbrennungsmotor 1 und elektrischer Maschine 2 ist durch die sogenannte Standübersetzung des Planetengetriebes 4 definiert.

Falls erforderlich, wird am Verbrennungsmotor 1 ein Lastabbau durchgeführt, bis die elektrische Maschine 2 das Moment des Verbrennungsmotors 1 abstützen kann. Nachfolgend kann dann die Kupplung 5 lastfrei geöffnet werden.

Weitere erfindungsgemäße Verfahren, die weiter unten beschrieben werden, betreffen die Umschaltung des Schaltelements 6 von der Schaltposition B in die Schaltposition A oder umgekehrt von der Schaltposition A in die Schaltposition B jeweils ohne Zugkraftunterbrechung bei jeweils anfänglich geöffneter Kupplung 5, wobei diese Verfahren ausschließlich mit einer reibschlüssigen Kupplung 5 durchgeführt werden können, da die Kupplung 5 bei diesen Verfahren schlupfend betreibbar sein muss.

Eines dieser beiden Verfahren betrifft eine Umschaltung des Schaltelements 6 von der Schaltposition B in die Schaltposition A ohne Zugkraftunterbrechung am Abtrieb bei anfänglich geöffneter Kupplung 6, wobei dies zum Beispiel mit einem Übergang vom rein elektrischen Kriechen in der Schaltposition B in ein elektrodynamisches Kriechen in der Schalposition A ohne Zugkraftunterbrechung durchgeführt wird. Ein solcher Übergang kann zum Beispiel dann erforderlich sein, wenn über längere Zeit rein elektrisches Kriechen erfolgt und hierbei der elektrische Energiespeicher entleert wird, um nachfolgend beim elektrodynamischen Kriechen die elektrische Maschine 2 generatorisch zu betreiben und den elektrische Energiespeicher wieder aufzuladen.

Im Ausgangszustand dieses Verfahrens ist demnach am Schaltelement 6 die Schaltposition B eingelegt, die Kupplung 5 ist geöffnet und der Verbrennungsmotor 1 läuft. Um nun die Umschaltung von der Schaltposition B in die Schaltposition A auszuführen, erfolgt zunächst ein Lastübergang von der elektrischen Maschine 2 auf die Kupplung 5, wobei hierbei der Verbrennungsmotor 1 über die Kupplung 5 Antriebsmoment an der elektrischen Maschine 2 vollständig übernimmt. So erfolgt demnach an der elektrischen Maschine 2 ein vollständiger Momentabbau. Bei geringen Fahrgeschwindigkeiten befindet sich hierbei die Kupplung 5 im Schlupf. Hierdurch wird das Schaltelement 6 bezogen auf die Schaltposition B lastfrei, sodass nachfolgend die Schaltposition B ausgelegt werden kann. Mithilfe der elektrischen Maschine 2 kann über einen drehzahlgeregelten Betrieb derselben das Schaltelement 6 bezogen auf die Schaltposition A synchronisiert werden, um nachfolgend die Schaltposition A einzulegen.

Darauffolgend erfolgt vorzugsweise ein Lastaufbau an der elektrischen Maschine 2, sodass die Kupplung 5 lastfrei wird. Dabei stützt die elektrische Maschine 2 Moment des Verbrennungsmotors 1 so ab, dass über die Kupplung 5 kein Moment mehr geleitet wird. Das Moment des Verbrennungsmotors 1 wird dabei vorzugsweise so abgesenkt, dass das Getriebeeingangsmoment des Getriebes 3 nicht erhöht wird. Nachfolgend wird die Kupplung 5 geöffnet.

In einem weiteren Verfahren erfolgt ein Umschalten des Schaltelements 6 von der Schaltposition A in die Schaltposition B ohne Zugkraftunterbrechung bei anfänglich geöffneter Kupplung 5, um zum Beispiel einen Übergang vom elektrodynamischen Kriechen in der Schaltposition A ins elektrische Kriechen in der Schaltposition B ohne Zugkraftunterbrechung zu ermöglichen. Ein solches Umschalten ist zum Beispiel dann erforderlich, wenn längere Zeit in der Schaltposition A ein generatorisches, elektrodynamisches Kriechen erfolgt und der Ladezustand des elektrischen Energiespeichers einen kritischen Grenzwert überschreitet. In diesem Fall muss dann in die Schaltposition B gewechselt werden und rein elektrisches Kriechen erfolgen, in welchem die elektrische Maschine 2 motorisch betrieben wird, um so den elektrischen Energiespeicher zu entladen.

Im Ausgangszustand dieses Verfahrens ist am Schaltelement 6 die Schaltposition A eingelegt, die Kupplung 5 ist geöffnet und der Verbrennungsmotor 1 läuft. Zunächst erfolgt ein Lastübergang von der elektrischen Maschine 2 auf die Kupplung 5, der Verbrennungsmotor 1 übernimmt also über die Kupplung 5 das Antriebsmoment der elektrischen Maschine 2 vollständig, wobei hier bei geringen Fahrgeschwindigkeiten die Kupplung 5 im Schlupf betrieben wird. Es erfolgt demnach ein vollständiger Momentabbau an der elektrischen Maschine 2, wodurch das Schaltelement 6 bezogen auf die Schaltposition A lastfrei wird. Darauffolgend kann dann die Schaltposition A ausgelegt werden, wobei darauffolgend mithilfe einer drehzahlgeregelten, elektrischen Maschine 2 das Schaltelement 6 bezogen auf die Schaltposition B synchronisiert wird, um nachfolgend die Schaltposition B einzulegen. Anschließend erfolgt ein Lastübergang von dem Verbrennungsmotor 1 auf die elektrische Maschine 2, wobei an der elektrischen Maschine 2 ein Lastaufbau und am Verbrennungsmotor 1 ein Lastabbau erfolgt.

Die Kupplung 5 wird durch den Lastabbau am Verbrennungsmotor 1 lastfrei, sodass die Kupplung 5 lastfrei geöffnet werden kann. Nachfolgend erfolgt rein elektrisches Kriechen, wobei der Verbrennungsmotor 1 bei Leerlaufdrehzahl betrieben oder auch abgeschaltet werden kann.

### Bezugszeichen

- 1: Verbrennungsmotor
- 2: elektrische Maschine
- 3: Getriebe
- 4: Planetengetriebe
- 5: Kupplung
- 6: Schaltelement
- 7: Torsionsdämpfer
- 8: Steg
- 9: Hohlrad
- 10: Sonnenrad
- 11: Getriebeeingangswelle

## Patentansprüche

1. Verfahren zum Betreiben einer Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, und mit einem Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** zum Umschalten des Schaltelements (6) von der ersten Schaltstellung (A) in die zweite Schaltstellung (B) bei anfänglich geöffneter Kupplung (5) zunächst die Kupplung (5) geschlossen wird, anschließend die elektrische Maschine (2) vorzugsweise vollständig lastfrei gemacht und deren Last vollständig oder teilweise auf den Verbrennungsmotor (1) verlagert wird, darauffolgend die erste Schaltstellung (A) ausgelegt wird, anschließend über die elektrische Maschine (2) das Schaltelement (6) bezogen auf die zweite Schaltstellung (B) synchronisiert wird und darauffolgend die zweite Schaltstellung (B) eingelegt wird.

2. Verfahren zum Betreiben einer Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, und mit einem Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** zum Umschalten des Schaltelements (6) von der zweiten Schaltstellung (B) in die erste Schaltstellung (A) bei geöffneter Kupplung (5) zunächst die elektrische Maschine (2) unter Bereitstellung einer Zugkraftunterbrechung vorzugsweise vollständig lastfrei gemacht wird, darauffolgend die zweite Schaltstellung (B) ausgelegt wird, anschließend über die elektrische Maschine (2) das Schaltelement (6) bezogen auf die erste Schaltstellung (A) synchronisiert wird und darauffolgend die erste Schaltstellung (A) eingelegt wird.

3. Verfahren zum Betreiben einer Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, und mit einem Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** zum Umschalten des Schaltelements (6) von der zweiten Schaltstellung (B) in die erste Schaltstellung (A) bei geschlossener Kupplung (5) zunächst die elektrische Maschine (2) vorzugsweise vollständig lastfrei gemacht und deren Last vollständig oder teilweise auf den Verbrennungsmotor (1) verlagert wird, darauffolgend die zweite Schaltstellung (B) ausgelegt wird, anschließend über die elektrische Maschine (2) das Schaltelement (6) bezogen auf die erste Schaltstellung (A) synchronisiert und dann die erste Schaltstellung (A) eingelegt wird.

4. Verfahren zum Betreiben einer Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, und mit einem Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** zum Umschalten des Schaltelements (6) von der zweiten Schaltstellung (B) in die erste Schaltstellung (A) ohne Zugkraftunterbrechung bei anfänglich geöffneter Kupplung (5) zunächst von der elektrischen Maschine (2) bereitgestellte Last über die insbesondere schlupfend betriebene Kupplung (5) vollständig oder teilweise auf den Verbrennungsmotor (1) verlagert wird, anschließend die zweite Schaltstellung (B) ausgelegt wird, darauffolgend über die elektrische Maschine (2) das Schaltelement (6) bezogen auf die erste Schaltstellung (A) synchronisiert wird, anschließend die erste Schaltstellung (A) eingelegt wird, anschließend an der elektrischen Maschine (2) Last aufgebaut und die Kupplung (5) lastfrei gemacht wird, und darauffolgend die Kupplung (5) wieder geöffnet wird.

5. Verfahren zum Betreiben einer Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, und mit einem Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** zum Umschalten des Schaltelements (6) von der ersten Schaltstellung (A) in die zweite Schaltstellung (B) ohne Zugkraftunterbrechung bei anfänglich geöffneter Kupplung (5) zunächst von der elektrischen Maschine (2) bereitgestellte Last über die insbesondere schlupfend betriebene Kupplung (5) vollständig oder teilweise auf den Verbrennungsmotor (1) verlagert wird, anschließend die erste Schaltstellung (A) ausgelegt wird, darauffolgend über die elektrische Maschine (2) das Schaltelement (6) bezogen auf die zweite Schaltstellung (B) synchronisiert wird, anschließend die zweite Schaltstellung (B) eingelegt wird, anschließend an der elektrischen Maschine (2) Last aufgebaut und die Kupplung (5) lastfrei gemacht wird, und darauffolgend die Kupplung (5) wieder geöffnet wird.

6. Verfahren zum Betreiben einer Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, und mit einem Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** zum Öffnen der Kupplung (5) bei eingelegter erster Schaltstellung (A) des Schaltelements (6) eine vom Verbrennungsmotor (1) bereitgestellte Last an der elektrischen Maschine abgestützt wird, die Kupplung (5) in einen lastfreien Zustand überführt und die Kupplung (5) im lastfreien Zustand geöffnet wird.

7. Verfahren nach einem der Ansprüche 1 bis 6, **dadurch gekennzeichnet, dass** in der ersten Schaltstellung (A) des Schaltelements (6) das Planetengetriebe (4) als Überlagerungsgetriebe dient und die Kupplung (5) als Überbrückungskupplung zwischen das dritte Element des Planetengetriebes und das erste Element desselben geschaltet ist.

8. Verfahren nach einem der Ansprüche 1 bis 7, **dadurch gekennzeichnet, dass** in der zweiten Schaltstellung (B) des Schaltelements (6) das Planetengetriebe (4) als Konstantübersetzung dient und die Kupplung (5) als Trennkupplung zwischen den Verbrennungsmotor (1) und das Getriebe (3) koppelbar ist.

9. Verfahren nach einem der Ansprüche 1 bis 8, **dadurch gekennzeichnet, dass** das dritte Element dieser Elemente (8, 9, 10) des Planetengetriebes (4) in einer dritten Schaltstellung (O) des Schaltelements (6) sowohl vom Verbrennungsmotor (1) als auch gehäuseseitig abkoppelbar ist, sodass das dritte Element frei drehen kann.

10. Verfahren nach einem der Ansprüche 1 bis 9, **dadurch gekennzeichnet, dass** dann, wenn eine Fahrgeschwindigkeit kleiner als ein Grenzwert ist und weiterhin ein Ladezustand eines elektrischen Energiespeichers größer als ein Grenzwert ist, das Schaltelement (6) die zweite Schaltstellung (B) einnimmt, wohingegen bei anderen Ladezuständen das Schaltelement (6) die erste Schaltstellung (A) einnimmt.

11. Verfahren nach einem der Ansprüche 1 bis 9, **dadurch gekennzeichnet, dass** dann, wenn eine Fahrgeschwindigkeit größer als ein Grenzwert und in etwa konstant ist, das Schaltelement (6) die dritte Schaltstellung (O) einnimmt.

12. Verfahren nach einem der Ansprüche 1 bis 11, **dadurch gekennzeichnet, dass** beim Bremsen über die elektrische Maschine zum Rekuperieren das Schaltelement (6) die zweite Schaltstellung (B) einnimmt.

13. Vorrichtung für einen Antriebsstrang eines Hybridfahrzeugs, mit einem die Elemente Hohlrad (9), Sonnenrad (10) und Steg (8) aufweisenden Planetengetriebe (4), wobei ein erstes Element dieser Elemente (8, 9, 10) des Planetengetriebes der festen Anbindung einer Getriebeeingangswelle (11) eines Getriebes (3) dient, und wobei ein zweites Element dieser Elemente (8, 9, 10) des Planetengetriebes der festen Anbindung einer elektrischen Maschine (2) eines Hybridantriebs dient, und mit einer Kupplung (5), über die zwei dieser drei Elemente (8, 9, 10) des Planetengetriebes koppelbar sind, wobei ein Schaltelement (6), über welches ein drittes Element dieser Elemente (8, 9, 10) des Planetengetriebes in einer ersten Schaltstellung (A) an einen Verbrennungsmotor (1) des Hybridantriebs und in einer zweiten Schaltstellung (B) gehäuseseitig bzw. statorseitig ankoppelbar ist, **dadurch gekennzeichnet, dass** beim Bremsen über die elektrische Maschine (2) zum Rekuperieren das Schaltelement (6) die zweite Schaltstellung (B) einnimmt.

14. Antriebsstrang eines Hybridfahrzeugs mit einem einen Verbrennungsmotor (1) und eine elektrische Maschine (2) umfassenden Antriebsaggregat, **gekennzeichnet durch** Merkmale des Anspruch 13.

## Claims

1. Method for operating a device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, for the shifting of the shift element (6) from the first shift position (A) into the second shift position (B) in the case of an initially open clutch (5), the clutch (5) is firstly closed, the electric machine (2) is subsequently rendered preferably entirely load-free, and the load thereof is transferred entirely or partially to the internal combustion engine (1), the first shift position (A) is thereafter disengaged, the shift element (6) is subsequently synchronized in relation to the second shift position (B) by means of the electric machine (2), and the second shift position (B) is thereafter engaged.

2. Method for operating a device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, for the shifting of the shift element (6) from the second shift position (B) into the first shift position (A) in the case of an open clutch (5), the electric machine (2) is rendered preferably entirely load-free, with an interruption in traction power, the second shift position (B) is thereafter disengaged, the shift element (6) is subsequently synchronized in relation to the first shift position (A) by means of the electric machine (2), and the first shift position (A) is thereafter engaged.

3. Method for operating a device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, for the shifting of the shift element (6) from the second shift position (B) into the first shift position (A) in the case of a closed clutch (5), the electric machine (2) is firstly rendered preferably entirely load-free, and the load thereof is transferred entirely or partially to the internal combustion engine (1), the second shift position (B) is thereafter disengaged, the shift element (6) is subsequently synchronized in relation to the first shift position (A) by means of the electric machine (2), and the first shift position (A) is thereafter engaged.

4. Method for operating a device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, for the shifting of the shift element (6) from the second shift position (B) into the first shift position (A) without an interruption in traction power in the case of an initially open clutch (5), load provided by the electric machine (2) is firstly transferred entirely or partially to the internal combustion engine (1) by means of the clutch (5) which is operated in particular in a slipping state, the second shift position (B) is thereafter disengaged, the shift element (6) is subsequently synchronized in relation to the first shift position (A) by means of the electric machine (2), the first shift position (A) is subsequently engaged, load is subsequently built up at the electric machine (2) and the clutch (5) is rendered load-free, and the clutch (5) is thereafter opened again.

5. Method for operating a device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, for the shifting of the shift element (6) from the first shift position (A) into the second shift position (B) without an interruption in traction power in the case of an initially open clutch (5), load provided by the electric machine (2) is firstly transferred entirely or partially to the internal combustion engine (1) by means of the clutch (5) which is operated in particular in a slipping state, the first shift position (A) is thereafter disengaged, the shift element (6) is subsequently synchronized in relation to the second shift position (B) by means of the electric machine (2), the second shift position (B) is subsequently engaged, load is subsequently built up at the electric machine (2) and the clutch (5) is rendered load-free, and the clutch (5) is thereafter opened again.

6. Method for operating a device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, for the opening of the clutch (5) when the first shift position (A) of the shift element (6) is engaged, a load provided by the internal combustion engine (1) is supported on the electric machine, the clutch (5) is transferred into a load-free state, and the clutch (5) is opened in the load-free state.

7. Method according to one of Claims 1 to 6, **characterized in that**, in the first shift position (A) of the shift element (6), the planetary gear set (4) serves as a superposition gearing and the clutch (5) is connected as a lock-up clutch between the third element of the planetary gear set and the first element thereof.

8. Method according to one of Claims 1 to 7, **characterized in that**, in the second shift position (B) of the shift element (6), the planetary gear set (4) serves as a constant transmission ratio and the clutch (5) can be coupled as a separating clutch between the internal combustion engine (1) and the transmission (3).

9. Method according to one of Claims 1 to 8, **characterized in that** the third element of said elements (8, 9, 10) of the planetary gear set (4) can, in a third shift position (0) of the shift element (6), be decoupled both from the internal combustion engine (1) and from the housing, such that the third element can rotate freely.

10. Method according to one of Claims 1 to 9, **characterized in that**, if a travelling speed is lower than a threshold value and, furthermore, a state of charge of an electrical energy store is higher than a threshold value, the shift element (6) assumes the second shift position (B), whereas, in other load states, the shift element (6) assumes the first shift position (A).

11. Method according to one of Claims 1 to 9, **characterized in that**, if a travelling speed is higher than a threshold value and approximately constant, the shift element (6) assumes the third shift position (0).

12. Method according to one of Claims 1 to 11, **characterized in that**, during braking by means of the electric machine for recuperation purposes, the shift element (6) assumes the second shift position (B).

13. Device for a drivetrain of a hybrid vehicle, having a planetary gear set (4) which has the elements internal gear (9), sun gear (10) and web (8), wherein a first element of said elements (8, 9, 10) of the planetary gear set serves for the fixed connection of a transmission input shaft (11) of a transmission (3), and wherein a second element of said elements (8, 9, 10) of the planetary gear set serves for the fixed connection of an electric machine (2) of a hybrid drive, and having a clutch (5) by means of which two of said three elements (8, 9, 10) of the planetary gear set can be coupled, and having a shift element (6), by means of which a third element of said elements (8, 9, 10) of the planetary gear set can, in a first shift position (A), be coupled to an internal combustion engine (1) of the hybrid drive and can, in a second shift position (B), be coupled to a housing or stator, **characterized in that**, during braking by means of the electric machine (2) for recuperation purposes, the shift element (6) assumes the second shift position (B).

14. Drivetrain of a hybrid vehicle having a drive assembly which comprises an internal combustion engine (1) and an electric machine (2), **characterized by** features of Claim 13.

## Revendications

1. Procédé pour faire fonctionner un dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, pour commuter l'élément de commutation (6) de la première position de commutation (A) à la deuxième position de commutation (B) avec l'embrayage (5) initialement ouvert, on ferme d'abord l'embrayage (5), puis on décharge de préférence entièrement la machine électrique (2) et on transfère sa charge entièrement ou partiellement au moteur à combustion interne (1), ensuite on débraye la première position de commutation (A), puis on synchronise l'élément de commutation (6) par rapport à la deuxième position de commutation (B) au moyen de la machine électrique (2) et enfin on embraye la deuxième position de commutation (B).

2. Procédé pour faire fonctionner un dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, pour commuter l'élément de commutation (6) de la deuxième position de commutation (B) à la première position de commutation (A) avec l'embrayage (5) ouvert, on décharge d'abord de préférence entièrement la machine électrique (2) sous réalisation d'une interruption de la force de traction, puis on débraye la deuxième position de commutation (B), ensuite on synchronise l'élément de commutation (6) par rapport à la première position de commutation (A) au moyen de la machine électrique (2) et enfin on embraye la première position de commutation (A).

3. Procédé pour faire fonctionner un dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, pour commuter l'élément de commutation (6) de la deuxième position de commutation (B) à la première position de commutation (A) avec l'embrayage (5) fermé, on décharge d'abord de préférence entièrement la machine électrique (2) et on transfère sa charge entièrement ou partiellement au moteur à combustion interne (1), puis on débraye la deuxième position de commutation (B), ensuite on synchronise l'élément de commutation (6) par rapport à la première position de commutation (A) au moyen de la machine électrique (2) et enfin on embraye la première position de commutation (A).

4. Procédé pour faire fonctionner un dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, pour commuter l'élément de commutation (6) de la deuxième position de commutation (B) à la première position de commutation (A) sans interruption de la force de traction avec l'embrayage (5) initialement ouvert, on transfère d'abord la charge fournie par la machine électrique (2) entièrement ou partiellement au moteur à combustion interne (1) au moyen de l'embrayage (5) fonctionnant en particulier de façon glissante, ensuite on débraye la deuxième position de commutation (B), puis on synchronise l'élément de commutation (6) par rapport à la première position de commutation (A) au moyen de la machine électrique (2), ensuite on applique la charge à la machine électrique (2) et on décharge l'embrayage (5), et enfin on ouvre de nouveau l'embrayage (5).

5. Procédé pour faire fonctionner un dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, pour commuter l'élément de commutation (6) de la première position de commutation (A) à la deuxième position de commutation (B) sans interruption de la force de traction avec l'embrayage (5) initialement ouvert, on transfère d'abord la charge fournie par la machine électrique (2) entièrement ou partiellement au moteur à combustion interne (1) au moyen de l'embrayage (5) fonctionnant en particulier de façon glissante, ensuite on débraye la première position de commutation (A), puis on synchronise l'élément de commutation (6) par rapport à la deuxième position de commutation (B) au moyen de la machine électrique (2), ensuite on embraye la deuxième position de commutation (B), on applique ensuite la charge à la machine électrique (2) et on décharge l'embrayage (5), et enfin on ouvre de nouveau l'embrayage (5).

6. Procédé pour faire fonctionner un dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, pour ouvrir l'embrayage (5) avec la première position de commutation (A) de l'élément de commutation (6) engagée, on applique une charge fournie par le moteur à combustion interne (1) à la machine électrique, on amène l'embrayage (5) dans un état déchargé et on ouvre l'embrayage (5) dans l'état déchargé.

7. Procédé selon l'une quelconque des revendications 1 à 6, **caractérisé en ce que** dans la première position de commutation (A) de l'élément de commutation (6), l'engrenage planétaire (4) sert d'engrenage différentiel et l'embrayage (5) est monté comme embrayage de pontage entre le troisième élément de l'engrenage planétaire et le premier élément de celui-ci.

8. Procédé selon l'une quelconque des revendications 1 à 7, **caractérisé en ce que** dans la deuxième position de commutation (B) de l'élément de commutation (6), l'engrenage planétaire (4) sert de transmission constante et l'embrayage (5) peut être couplé en tant qu'embrayage de séparation entre le moteur à combustion interne (1) et la boîte de vitesses (3).

9. Procédé selon l'une quelconque des revendications 1 à 8, **caractérisé en ce que** le troisième élément de ces éléments (8, 9, 10) de l'engrenage planétaire (4) peut, dans une troisième position (O) de l'élément de commutation (6), être découplé aussi bien du moteur à combustion interne (1) que du côté boîtier, de telle manière que le troisième élément puisse tourner librement.

10. Procédé selon l'une quelconque des revendications 1 à 9, **caractérisé en ce que**, lorsqu'une vitesse de déplacement est inférieure à une valeur limite et qu'en plus un état de charge d'un accumulateur d'énergie électrique est supérieur à une valeur limite, l'élément de commutation (6) occupe la deuxième position de commutation (B), et au contraire dans d'autres états de charge l'élément de commutation (6) occupe la première position de commutation (A).

11. Procédé selon l'une quelconque des revendications 1 à 9, **caractérisé en ce que**, lorsqu'une vitesse de déplacement est supérieure à une valeur limite et est sensiblement constante, l'élément de commutation (6) occupe la troisième position de commutation (0).

12. Procédé selon l'une quelconque des revendications 1 à 11, **caractérisé en ce que**, lors du freinage par la machine électrique en vue d'une récupération, l'élément de commutation (6) occupe la deuxième position de commutation (B).

13. Dispositif pour une chaîne cinématique d'un véhicule hybride, avec un engrenage planétaire (4) présentant les éléments couronne à denture intérieure (9), pignon planétaire (10) et porte-satellites (8), dans lequel un premier élément de ces éléments (8, 9, 10) de l'engrenage planétaire sert pour la liaison permanente d'un arbre d'entrée de boîte de vitesses (11) d'une boîte de vitesses (3), et dans lequel un deuxième élément de ces éléments (8, 9, 10) de l'engrenage planétaire sert pour la liaison permanente d'une machine électrique (2) d'un entraînement hybride, et avec un embrayage (5), par lequel deux de ces trois éléments (8, 9, 10) de l'engrenage planétaire peuvent être couplés, et avec un élément de commutation (6), par lequel un troisième élément de ces éléments (8, 9, 10) de l'engrenage planétaire peut être couplé dans une première position de commutation (A) à un moteur à combustion interne (1) de l'entraînement hybride et dans une deuxième position de commutation (B) du côté boîtier ou du côté stator, **caractérisé en ce que**, lors du freinage par la machine électrique (2) en vue d'une récupération, l'élément de commutation (6) occupe la deuxième position de commutation (B).

14. Chaîne cinématique d'un véhicule hybride avec un groupe propulseur comprenant un moteur à combustion interne (1) et une machine électrique (2), **caractérisée par** des caractéristiques de la revendication 13.
